# EUROPEAN PATENT APPLICATION

(11) **EP 4 443 205 A1**
(43) Date of publication of application: **09.10.2024**
(21) Application number: 21966424.0
(22) Date of filing: 03.12.2021
(51) Int. Cl.: G02B 6/12

(54) **OPTICAL WAVEGUIDE DEVICE, QUANTUM OPERATION DEVICE, AND METHOD FOR MANUFACTURING OPTICAL WAVEGUIDE DEVICE**

(71) Applicant: FUJITSU LIMITED, Kawasaki-shi, Kanagawa 211-8588 (JP)
(72) Inventor: MIYATAKE, Tetsuya, Kawasaki-shi, Kanagawa 211-8588 (JP)
(74) Representative: Hoffmann Eitle
(86) International application number: PCT/JP2021/044445
(87) International publication number: WO 2023/100343

(57) **Abstract**

An optical waveguide device includes: an optical waveguide substrate that has a first surface; and an optical waveguide layer that is provided on the first surface. In the optical waveguide device, the optical waveguide substrate includes: a first region that is exposed on the first surface, and extends linearly; and a second region that is exposed on the first surface, and is located on both sides of the first region in a planar view. The optical waveguide layer is provided on the first region, a second thermal expansion coefficient of the second region is smaller than a first thermal expansion coefficient of the first region, and a third thermal expansion coefficient of the optical waveguide layer is smaller than the first thermal expansion coefficient.

## Description

### FIELD

The present disclosure relates to an optical waveguide device, a quantum operation device, and a method for manufacturing the optical waveguide device.

### BACKGROUND

A quantum device using a color center in a diamond layer has been studied. Also, an optical waveguide device has been studied. In the optical waveguide device, an optical waveguide layer formed with diamond, and an optical waveguide substrate formed with a material such as sapphire having a lower refractive index than that of diamond are joined to each other, to propagate light emitted at a color center to a detector.

### SUMMARY

### TECHNICAL PROBLEM

In a conventional optical waveguide device, there is a possibility that separation occurs between the optical waveguide substrate and the optical waveguide layer.

An object of the present disclosure is to provide an optical waveguide device that is capable of reducing separation between an optical waveguide substrate and an optical waveguide layer, a quantum operation device, and a method for manufacturing the optical waveguide device.

### SOLUTION TO PROBLEM

According to one aspect of the present disclosure, there is provided an optical waveguide device that includes: an optical waveguide substrate that has a first surface; and an optical waveguide layer that is provided on the first surface. In the optical waveguide device, the optical waveguide substrate includes: a first region that is exposed on the first surface, and extends linearly; and a second region that is exposed on the first surface, and is located on both sides of the first region in a planar view. The optical waveguide layer is provided on the first region, a second thermal expansion coefficient of the second region is smaller than a first thermal expansion coefficient of the first region, and a third thermal expansion coefficient of the optical waveguide layer is smaller than the first thermal expansion coefficient.

### ADVANTAGEOUS EFFECTS OF INVENTION

According to the present disclosure, it is possible to reduce separation between the optical waveguide substrate and the optical waveguide layer.

### BRIEF DESCRIPTION OF DRAWINGS

FIG. 1 is a perspective view illustrating an optical waveguide device according to a first embodiment.
FIG. 2 is a cross-sectional view (part 1) illustrating the optical waveguide device according to the first embodiment.
FIG. 3 is a cross-sectional view (part 2) illustrating the optical waveguide device according to the first embodiment.
FIG. 4 is a cross-sectional view illustrating an optical waveguide device according to a first reference example.
FIG. 5 is a diagram illustrating deformation of an optical waveguide substrate and an optical waveguide layer in the first reference example.
FIG. 6 is a diagram illustrating deformation of an optical waveguide substrate and an optical waveguide layer in the first embodiment.
FIG. 7 is a cross-sectional view illustrating an optical waveguide device according to a second reference example.
FIG. 8 is a cross-sectional view illustrating an optical waveguide device according to a third reference example.
FIG. 9 is a cross-sectional view (part 1) illustrating a first method for manufacturing the optical waveguide device according to the first embodiment.
FIG. 10 is a cross-sectional view (part 2) illustrating the first method for manufacturing the optical waveguide device according to the first embodiment.
FIG. 11 is a cross-sectional view (part 3) illustrating the first method for manufacturing the optical waveguide device according to the first embodiment.
FIG. 12 is a cross-sectional view (part 4) illustrating the first method for manufacturing the optical waveguide device according to the first embodiment.
FIG. 13 is a cross-sectional view (part 1) illustrating a second method for manufacturing the optical waveguide device according to the first embodiment.
FIG. 14 is a cross-sectional view (part 2) illustrating the second method for manufacturing the optical waveguide device according to the first embodiment.
FIG. 15 is a cross-sectional view (part 3) illustrating the second method for manufacturing the optical waveguide device according to the first embodiment.
FIG. 16 is a cross-sectional view (part 4) illustrating the second method for manufacturing the optical waveguide device according to the first embodiment.
FIG. 17 is a cross-sectional view (part 5) illustrating the second method for manufacturing the optical waveguide device according to the first embodiment.
FIG. 18 is a top view illustrating an optical waveguide device according to a second embodiment.
FIG. 19 is a cross-sectional view illustrating the optical waveguide device according to the second embodiment.
FIG. 20 is a top view illustrating an optical waveguide device according to a modification of the second embodiment.
FIG. 21 is a cross-sectional view illustrating an optical waveguide device according to a third embodiment.
FIG. 22 is a cross-sectional view illustrating an optical waveguide device according to a fourth embodiment.
FIG. 23 is a top view illustrating an optical waveguide device according to a fifth embodiment.
FIG. 24 is a top view illustrating an optical waveguide device according to a sixth embodiment.
FIG. 25 is a top view illustrating an optical waveguide device according to a seventh embodiment.
FIG. 26 is a top view illustrating an optical waveguide device according to an eighth embodiment.
FIG. 27 is a top view illustrating an optical waveguide device according to a ninth embodiment.
FIG. 28 is a diagram illustrating a quantum computer according to a tenth embodiment.

### DESCRIPTION OF EMBODIMENTS

In the description below, embodiments of the present disclosure will be specifically described with reference to the accompanying drawings. Note that, in the present specification and the drawings, components having substantially the same functional configurations are denoted by the same reference numerals, and repetitive explanation thereof will be omitted in some cases. In the present disclosure, it is assumed that an X1-X2 direction, a Y1-Y2 direction, and a Z1-Z2 direction are directions orthogonal to one another. A plane including the X1-X2 direction and the Y1-Y2 direction is referred to as an X-Y plane, a plane including the Y1-Y2 direction and the Z1-Z2 direction is referred to as a Y-Z plane, and a plane including the Z1-Z2 direction and the X1-X2 direction is referred to as a Z-X plane. Note that, for convenience sake, the Y1-Y2 direction is set as the vertical direction, and the Y1 side is set as the upper side, and the Y2 side is set as the lower side. Furthermore, a planar view means viewing an object from the Y1 side, and a planar shape means a shape of an object viewed from the Y1 side.

### (First Embodiment)

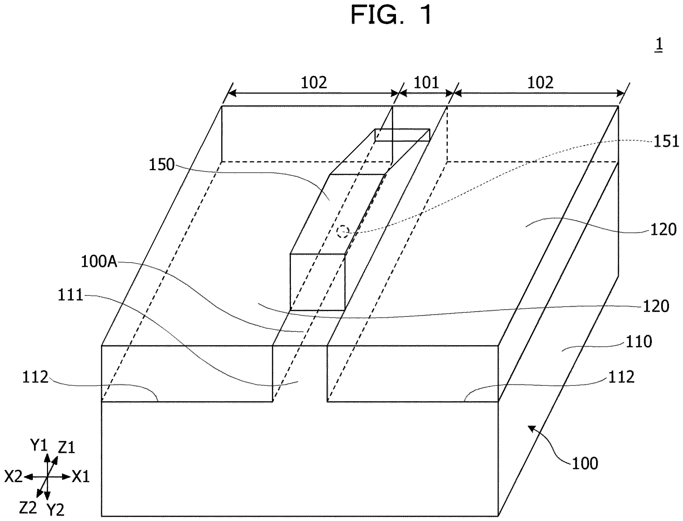

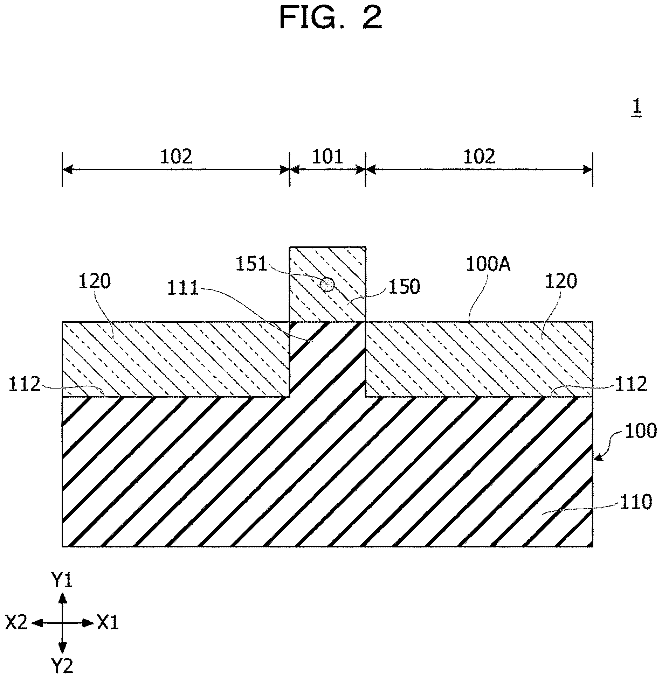

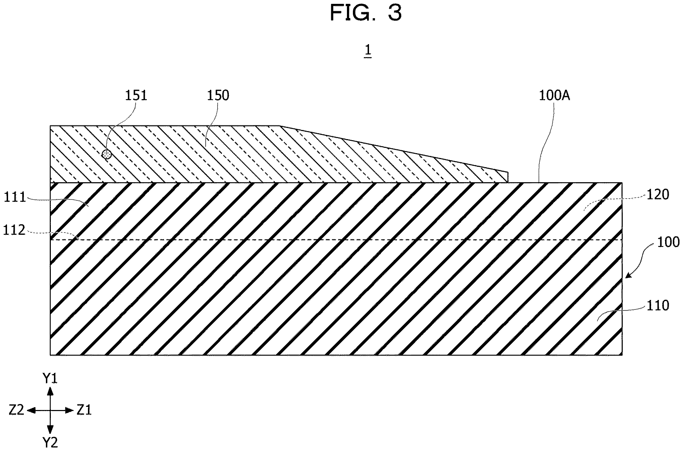

First, a first embodiment is described. The first embodiment relates to an optical waveguide device. The optical waveguide device according to the first embodiment is used for a quantum operation device such as a quantum computer, for example. FIG. 1 is a perspective view illustrating the optical waveguide device according to the first embodiment. FIGs. 2 and 3 are cross-sectional view illustrating the optical waveguide device according to the first embodiment.

As illustrated in FIGs. 1 to 3, an optical waveguide device 1 according to the first embodiment includes an optical waveguide substrate 100 and an optical waveguide layer 150. The optical waveguide substrate 100 has a first surface 100A on the Y1 side. The first surface 100A is parallel to the Z-X plane. The optical waveguide layer 150 is disposed on the first surface 100A.

The optical waveguide substrate 100 has a first region 101 and second regions 102. The first region 101 and the second regions 102 are exposed on the first surface 100A. The first region 101 extends linearly. The first region 101 extends in parallel to the Z1-Z2 direction, for example. The second regions 102 are located on both sides of the first region 101 in a planar view, which is when viewed from a direction perpendicular to the first surface 100A. That is, the first region 101 is interposed between the two second regions 102 in the X1-X2 direction. The optical waveguide layer 150 is disposed over the first region 101.

The optical waveguide substrate 100 includes a substrate 110 and stress relieving members 120. The thermal expansion coefficient of the substrate 110 is greater than the thermal expansion coefficient of the optical waveguide layer 150. Meanwhile, the thermal expansion coefficient of the stress relieving members 120 is smaller than the thermal expansion coefficient of the substrate 110. The optical waveguide layer 150 contains diamond, for example. The optical waveguide layer 150 may be a diamond layer. The substrate 110 contains sapphire (Al₂O₃), for example. The substrate 110 may be a sapphire substrate. The stress relieving members 120 contain diamond, for example. The stress relieving members 120 may be diamond members. The thermal expansion coefficient of diamond is 0.8 × 10⁻⁶/K, and the thermal expansion coefficient of sapphire is 8.0 × 10⁻⁶/K.

The substrate 110 includes the first region 101 and the second regions 102, a protruding portion 111 is formed in the first region 101, and recessed portions 112 are formed in the second regions 102. The stress relieving members 120 are provided in the respective recessed portions 112. The surface of the protruding portion 111 on the Y1 side and the surfaces of the stress relieving members 120 on the Y1 side are flush with each other, and these surfaces constitute the first surface 100A. That is, the first surface 100A includes the surface of the protruding portion 111 on the Y1 side, and the surfaces of the stress relieving members 120 on the Y1 side. The depth of the protruding portion 111 and the depth of the recessed portions 112 are about 100 nm to 1000 nm, for example.

In the optical waveguide substrate 100, the first region 101 functions as an optical waveguide. For example, the refractive index of the portion that functions as an optical waveguide in the optical waveguide substrate 100 is lower than the refractive index of the optical waveguide layer 150.

The optical waveguide layer 150 includes a color center 151, for example. The end portion of the optical waveguide layer 150 closer to the side of a detector (not illustrated) than the color center 151, which is the Z1 side in the present embodiment, may be in a shape having a height that is smaller at a portion closer to the tip. In this case, a high light propagation efficiency is likely to be achieved between the optical waveguide layer 150 and the first region 101 of the optical waveguide substrate 100.

The optical waveguide device 1 according to the first embodiment is cooled to a cryogenic temperature of 4 K or lower, for example, and is then used. Therefore, the optical waveguide substrate 100 and the optical waveguide layer 150 are thermally contracted during use, and are thermally expanded when returned to room temperature after use. In the present embodiment, the protruding portion 111 and the recessed portions 112 are formed on the substrate 110, and the stress relieving members 120 are provided in the recessed portions 112. Accordingly, the thermal expansion coefficient of the second regions 102 is smaller than the thermal expansion coefficient of the first region 101. Also, the thermal expansion coefficient of the optical waveguide layer 150 is smaller than the thermal expansion coefficient of the first region 101. Because of this, the difference between the thermal expansion coefficient of the second regions 102 and the thermal expansion coefficient of the optical waveguide layer 150 can be made smaller than the difference between the thermal expansion coefficient of the first region 101 and the thermal expansion coefficient of the optical waveguide layer 150, and the stress to be generated between the entire optical waveguide substrate 100 and the optical waveguide layer 150 can be reduced. Thus, separation between the optical waveguide substrate 100 and the optical waveguide layer 150 can be reduced.

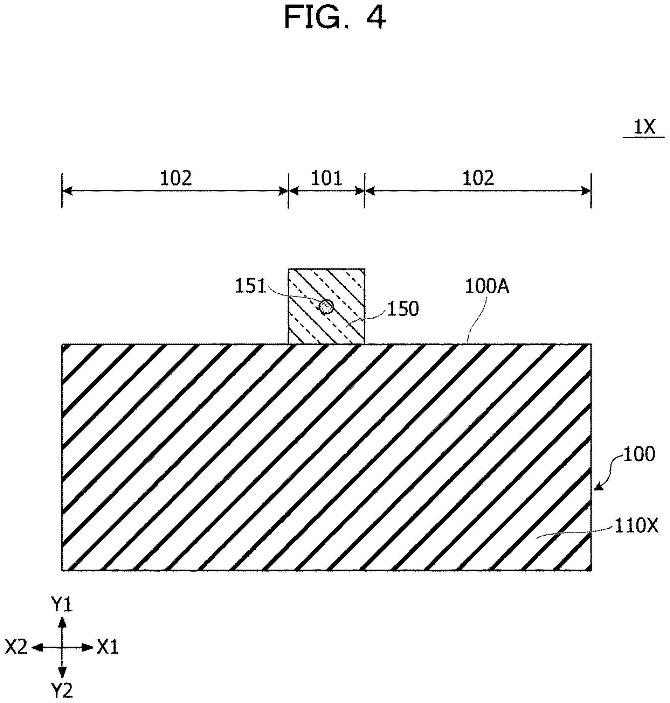

Here, the effects of the first embodiment are further described, while being compared with those of reference examples. FIG. 4 is a cross-sectional view illustrating an optical waveguide device according to a first reference example.

In an optical waveguide device 1X according to the first reference example, the optical waveguide substrate 100 includes a substrate 110X, as illustrated in FIG. 4. The material of the substrate 110X is the same as the material of the substrate 110. The other components are similar to those of the first embodiment.

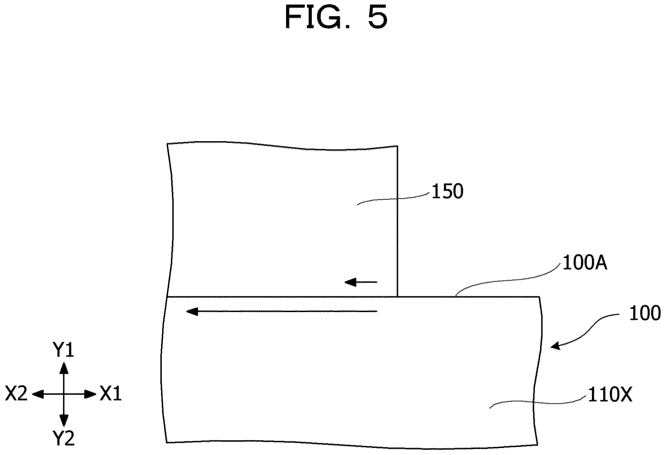

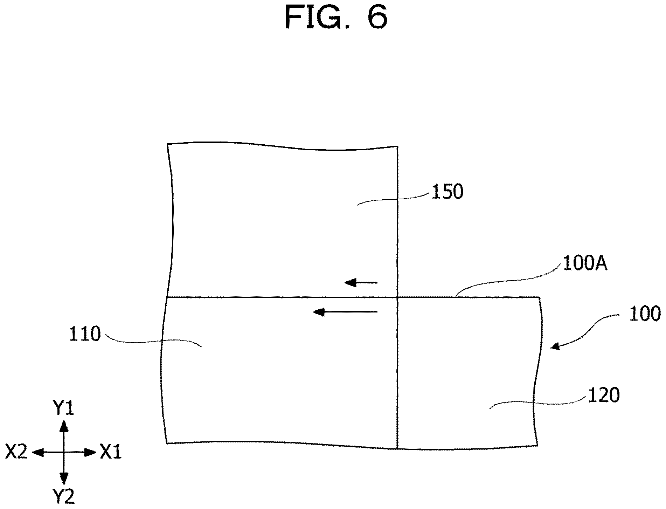

FIG. 5 is a diagram illustrating deformation of the optical waveguide substrate and the optical waveguide layer in the first reference example. FIG. 6 is a diagram illustrating deformation of the optical waveguide substrate and the optical waveguide layer in the first embodiment. Arrows in FIGs. 5 and 6 schematically illustrate the magnitudes of deformation, and the longer an arrow, the larger the deformation.

For example, it is assumed that the optical waveguide layer 150 and the stress relieving members 120 are formed with diamond, and the substrates 110 and 110X are sapphire substrates. Also, it is assumed that the dimension of the optical waveguide layer 150 in the X1-X2 direction is 0.2 µm, the dimension of the optical waveguide substrate 100 in the X1-X2 direction is 5.0 mm, and the optical waveguide layer 150 is disposed at the center of the optical waveguide substrate 100 in the X1-X2 direction.

In the first reference example, the entire first surface 100A is formed with the substrate 110X. Therefore, when cooled to 4 K from room temperature, the optical waveguide layer 150 has a thermal contraction amount of only 0.05 nm, while the first surface 100A has a thermal contraction amount of 12 µm, which means that the first surface 100A is thermally contracted by an amount 240,000 times that of the optical waveguide layer 150. Therefore, as illustrated in FIG. 5, a large difference in thermal deformation occurs in the vicinity of the interface between the optical waveguide layer 150 and the optical waveguide substrate 100, and, in particular, stress concentrates in the vicinity of the end portions of the optical waveguide layer 150 in the X1-X2 direction.

In the first embodiment, on the other hand, the portion of the first surface 100A in the first region 101 is formed with the substrate 110, but the portions of the first surface 100A in the second regions 102 are formed with the stress relieving members 120. Therefore, even if cooling from room temperature to 4 K is performed, only the portion of the first surface 100A in the first region 101 is thermally contracted greater than the optical waveguide layer 150. Accordingly, the difference in thermal deformation caused in the vicinity of the interface between the optical waveguide layer 150 and the optical waveguide substrate 100 is small, as illustrated in FIG. 6.

Thus, according to the first embodiment, it is possible to reduce separation between the optical waveguide substrate 100 and the optical waveguide layer 150, compared with the first reference example.

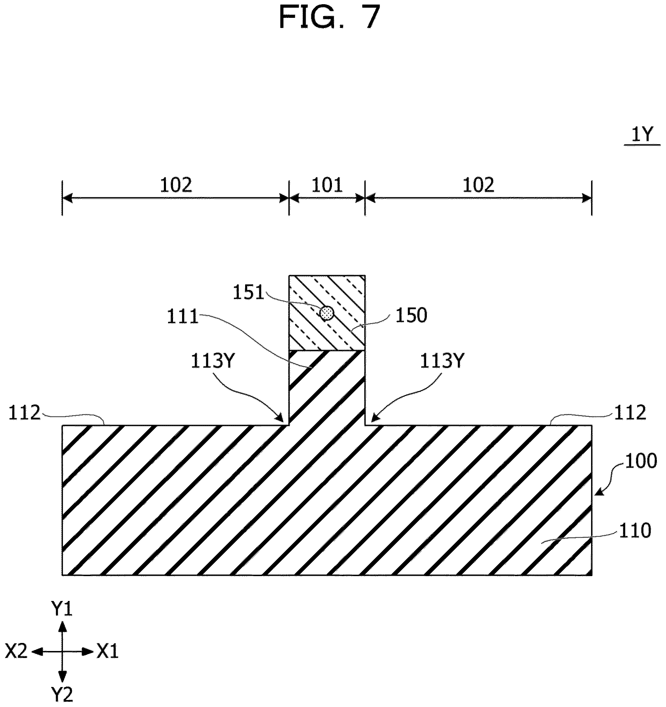

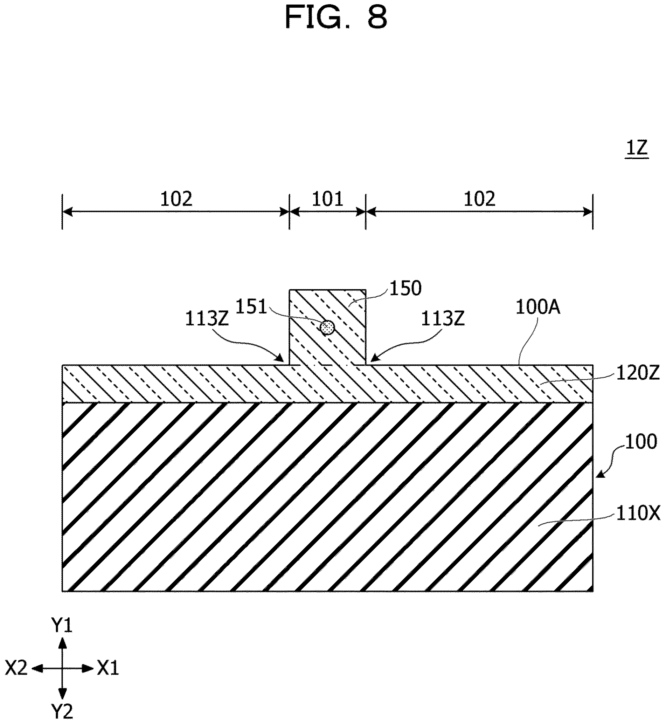

Next, a second reference example and a third reference example are described. FIG. 7 is a cross-sectional view illustrating an optical waveguide device according to the second reference example. FIG. 8 is a cross-sectional view illustrating an optical waveguide device according to the third reference example.

In an optical waveguide device 1Y according to the second reference example, the optical waveguide substrate 100 includes only the substrate 110, and the optical waveguide substrate 100 does not include the stress relieving members 120, as illustrated in FIG. 7. The other components are similar to those of the first embodiment.

According to such a second reference example, it is possible to reduce separation between the optical waveguide substrate 100 and the optical waveguide layer 150, as in the first embodiment. However, since the stress relieving members 120 are not provided, a large stress concentrates in the vicinity of the base 113Y of the protruding portion 111 with a temperature change, and there is a possibility that a defect such as a crack might appear in the substrate 110.

In an optical waveguide device 1Z according to the third reference example, the optical waveguide substrate 100 includes a substrate 110X and a diamond layer 120Z, as illustrated in FIG. 8. The diamond layer 120Z is disposed on substrate 110X, and the entire first surface 100A is formed with the diamond layer 120Z. The optical waveguide layer 150 and the diamond layer 120Z are integrally formed. The other components are similar to those of the first embodiment.

According to such a third reference example, it is possible to suppress separation between the integrally formed optical waveguide layer 150 and diamond layer 120Z, and the substrate 110X. However, a large stress concentrates in the vicinity of the base 113Z of the optical waveguide layer 150, and there is a possibility that a defect such as a crack might appear in the diamond layer 120Z. Furthermore, since the diamond layer 120Z is provided, the optical confinement effect is degraded, and a coupling loss is caused in the optical coupling between the optical waveguide layer 150 and the optical waveguide included in the optical waveguide substrate 100.

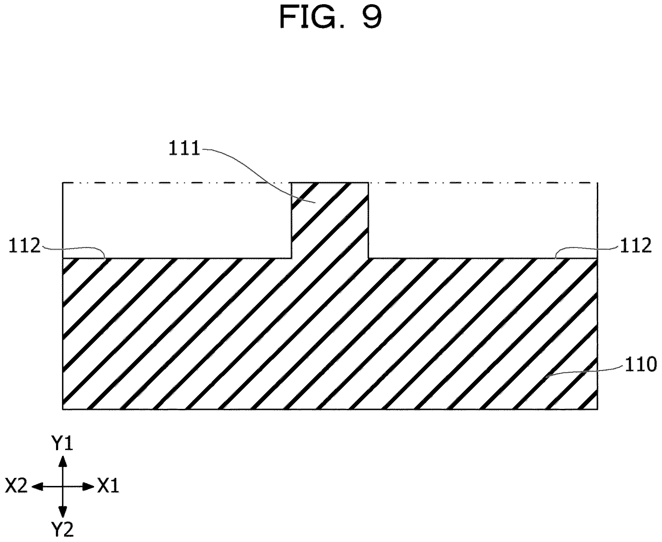

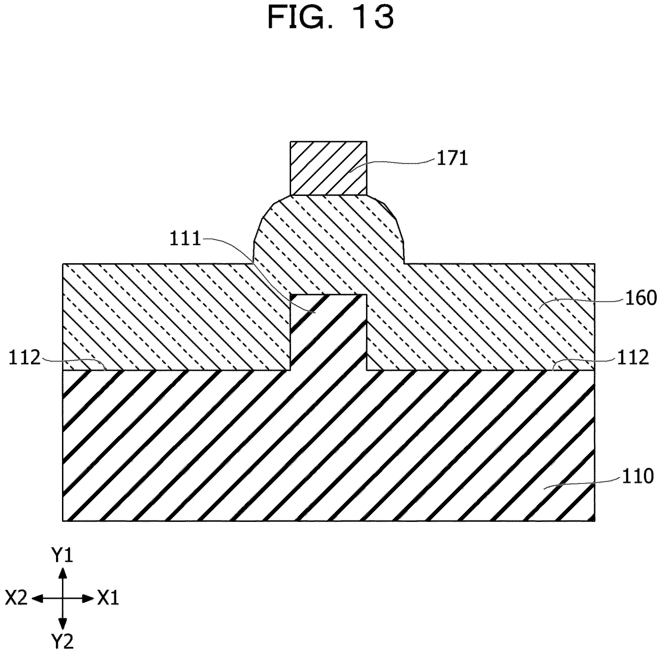

Next, two types of methods for manufacturing the optical waveguide device 1 according to the first embodiment are described. FIGs. 9 to 12 are cross-sectional views illustrating a first method for manufacturing the optical waveguide device 1 according to the first embodiment. FIGs. 13 to 17 are cross-sectional views illustrating a second method for manufacturing the optical waveguide device 1 according to the first embodiment.

By the first manufacturing method, as illustrated in FIG. 9, a substrate that is flat on the Y1 side is first prepared, and this substrate is processed, to obtain the substrate 110 including the protruding portion 111 and the recessed portions 112. For the processing of the substrate, etching is performed, for example.

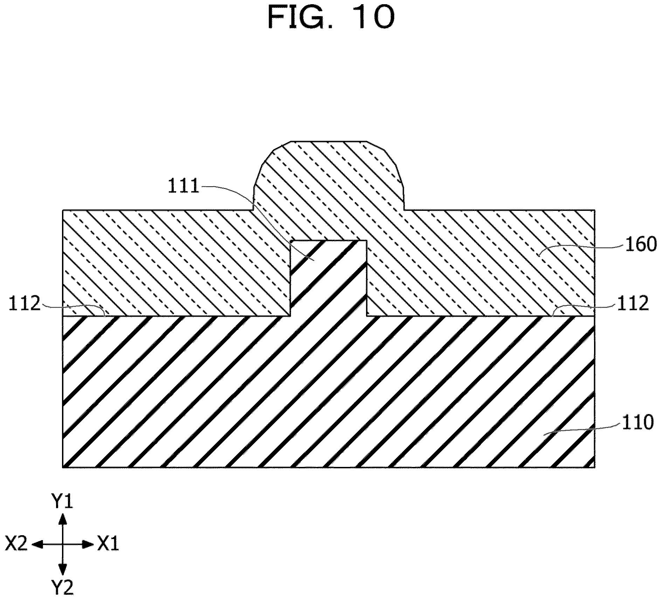

Next, as illustrated in FIG. 10, a diamond layer 160 that will later be the optical waveguide layer 150 and the stress relieving members 120 is formed on substrate 110, with a greater thickness than the height of protruding portion 111. The diamond layer 160 may be formed by a chemical vapor deposition (CVD) method or the like, for example.

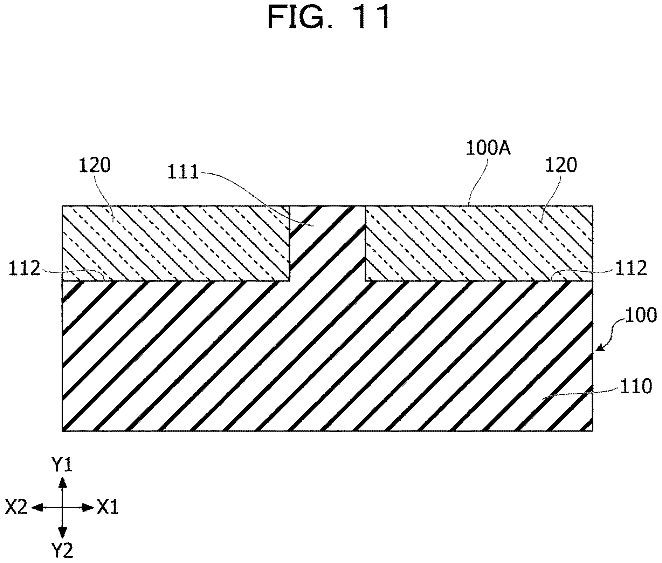

After that, as illustrated in FIG. 11, the diamond layer 160 is polished until the protruding portion 111 is exposed. As a result, the optical waveguide substrate 100 having the first surface 100A is obtained. The optical waveguide substrate 100 includes the substrate 110 and the stress relieving members 120. The surface of the substrate 110 on the Y1 side and the surfaces of the stress relieving members 120 on the Y1 side are flush with each other, and are included in the first surface 100A.

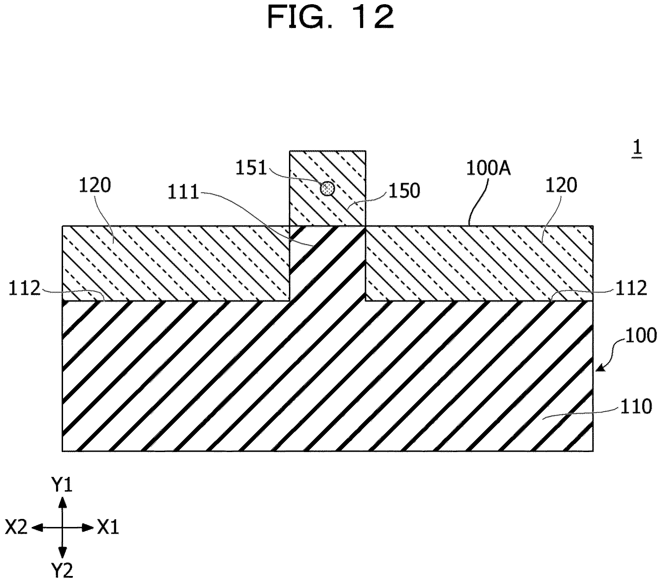

Subsequently, as illustrated in FIG. 12, the optical waveguide layer 150 including the color center 151 is disposed on the protruding portion 111, and the optical waveguide layer 150 and the substrate 110 are joined to each other. For example, the optical waveguide layer 150 and the substrate 110 may be joined by an intermolecular force.

In this manner, the optical waveguide device 1 according to the first embodiment may be manufactured.

By the second manufacturing method, the processes up to the formation of the diamond layer 160 are first performed as with the first manufacturing method (see FIG. 10). Next, as illustrated in FIG. 13, a mask 171 is formed on the region of the diamond layer 160 to be the optical waveguide layer 150. As the mask 171, a resist pattern is formed, for example.

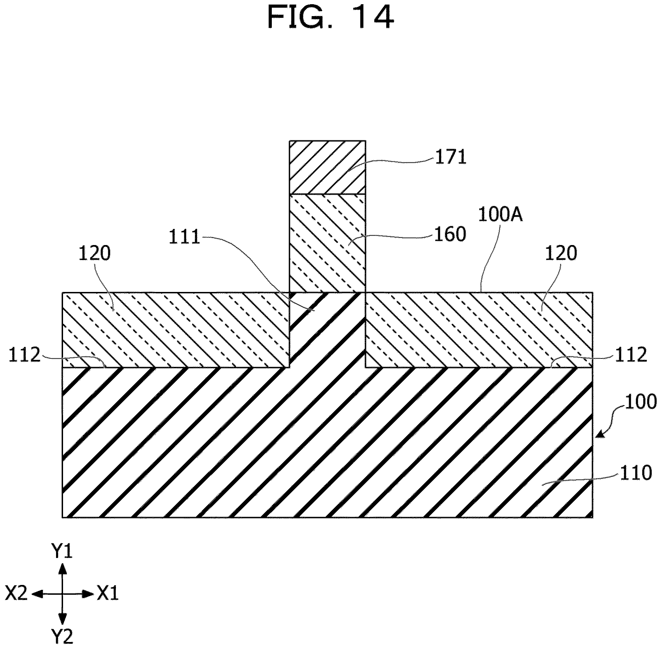

After that, as illustrated in FIG. 14, the portions of the diamond layer 160 exposed through the mask 171 are subjected to dry etching, to form the stress relieving members 120 from the diamond layer 160. As a result, the optical waveguide substrate 100 having the first surface 100A is obtained. The optical waveguide substrate 100 includes the substrate 110 and the stress relieving members 120. The surface of the substrate 110 on the Y1 side and the surfaces of the stress relieving members 120 on the Y1 side are flush with each other, and are included in the first surface 100A.

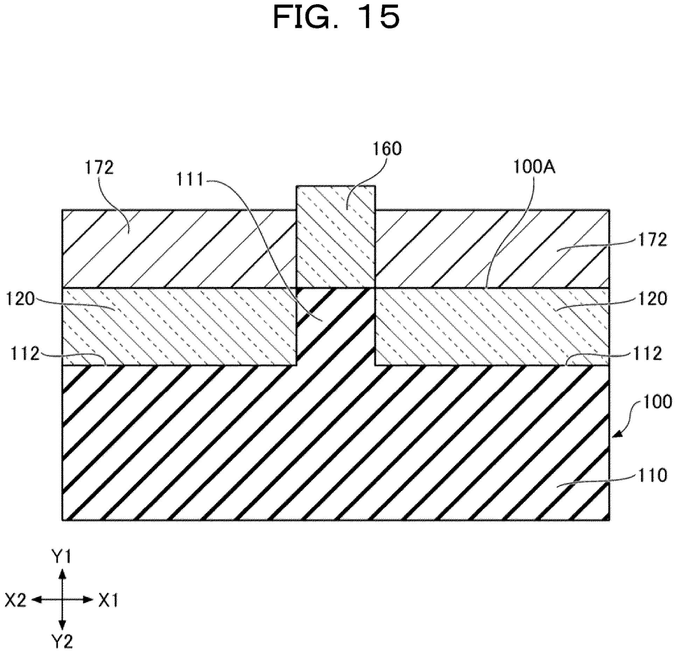

Subsequently, as illustrated in FIG. 15, the mask 171 is removed. Next, a mask 172 that covers the surfaces of the stress relieving members 120 on the Y1 side and exposes the surface of the diamond layer 160 on the Y1 side is formed on the stress relieving members 120. It is assumed that the thickness of the mask 172 is about the same as the thickness of the optical waveguide layer 150 to be formed. As the mask 172, a resist pattern is formed, for example. As the mask 172, a hard mask of silicon oxide (SiO₂), silicon nitride (SiN), or metal may be formed.

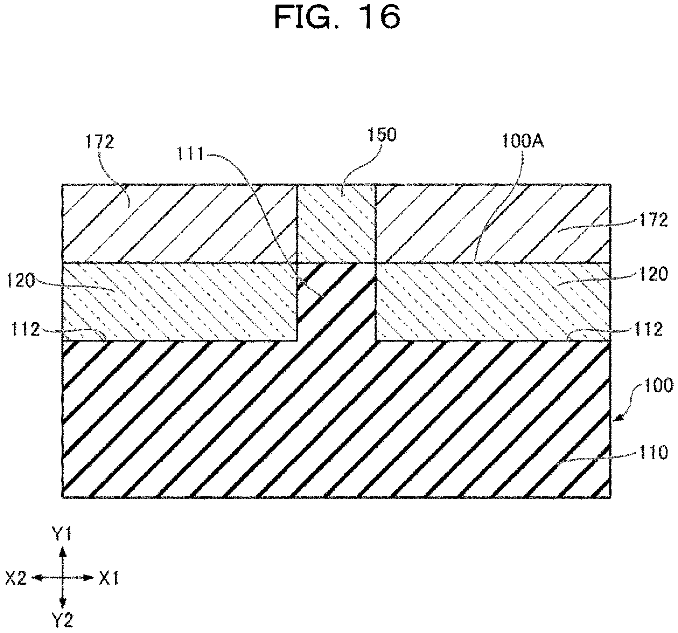

After that, as illustrated in FIG. 16, the portion of the diamond layer 160 exposed through the mask 172 is subjected to dry etching, to form the optical waveguide layer 150 from the diamond layer 160.

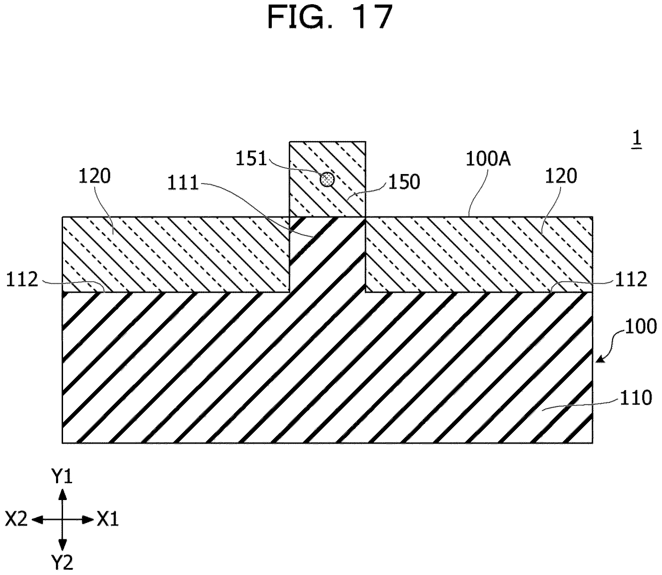

Subsequently, as illustrated in FIG. 17, the mask 172 is removed. Next, the color center 151 is formed in the optical waveguide layer 150 by ion implantation or the like.

In this manner, the optical waveguide device 1 according to the first embodiment may be manufactured.

### (Second Embodiment)

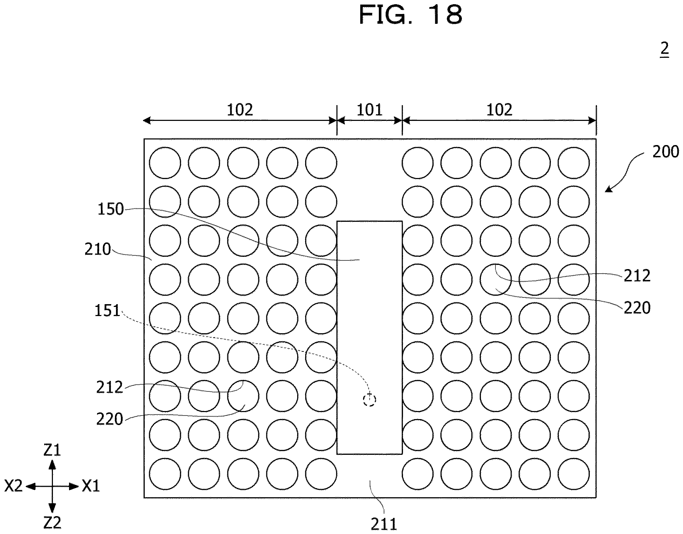

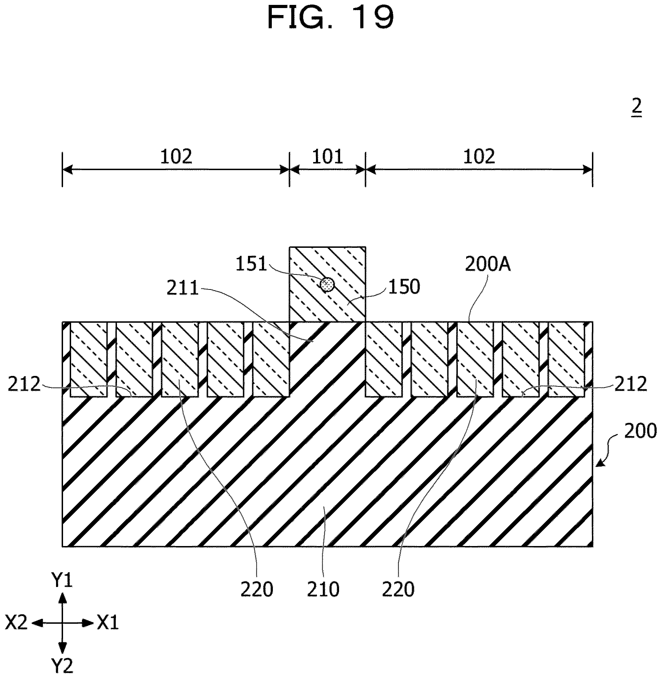

Next, a second embodiment is described. The second embodiment differs from the first embodiment mainly in the configuration of the optical waveguide substrate. FIG. 18 is a top view illustrating an optical waveguide device according to the second embodiment. FIG. 19 is a cross-sectional view illustrating the optical waveguide device according to the second embodiment.

As illustrated in FIGs. 18 and 19, an optical waveguide device 2 according to the second embodiment includes an optical waveguide substrate 200, instead of the optical waveguide substrate 100. The optical waveguide substrate 200 has a first surface 200A on the Y1 side. The first surface 200A is parallel to the Z-X plane. The optical waveguide layer 150 is disposed on the first surface 200A. The first region 101 and the second regions 102 of the optical waveguide substrate 200 are exposed on the first surface 200A.

The optical waveguide substrate 200 includes a substrate 210 and stress relieving members 220. The thermal expansion coefficient of the substrate 210 is greater than the thermal expansion coefficient of the optical waveguide layer 150. Meanwhile, the thermal expansion coefficient of the stress relieving members 220 is smaller than the thermal expansion coefficient of the substrate 210. The substrate 210 contains sapphire, for example. The substrate 210 may be a sapphire substrate. The stress relieving members 220 contain diamond, for example. The stress relieving members 220 may be diamond members.

The substrate 210 includes the first region 101 and the second regions 102, a protruding portion 211 is formed in the first region 101, and a plurality of recessed portions 212 is formed in the second regions 102. The plurality of recessed portions 212 is arranged in a square lattice-like shape in a planar view. The shape of the recessed portions 212 a cylindrical shape. The cross-sectional shape of the recessed portions 212 is a rectangular shape. The stress relieving members 220 are provided in the respective recessed portions 212. The surface of the protruding portion 211 on the Y1 side and the surfaces of the stress relieving members 220 on the Y1 side are flush with each other, and these surfaces constitute the first surface 200A. That is, the first surface 200A includes the surface of the protruding portion 211 on the Y1 side, and the surfaces of the stress relieving members 220 on the Y1 side. The depth of the protruding portion 211 and the depth of the recessed portions 212 are about 100 nm to 1000 nm, for example.

The other components are similar to those of the first embodiment.

According to the second embodiment, it is also possible to reduce separation between the optical waveguide substrate 200 and the optical waveguide layer 150, as in the first embodiment.

Also, in the second embodiment, depending on the layout of the plurality of recessed portions 212 and the stress relieving members 220, the second regions 102 function as photonic crystals. In a case where the second regions 102 function as photonic crystals, the shape of the recessed portions 212 is a cylindrical shape about 50 nm to 500 nm in diameter and about 100 nm to 1000 nm in depth, and the cycles of the recessed portions 212 in the X1-X2 direction and the Z1-Z2 direction are about 100 nm to 500 nm, for example.

The optical waveguide device 2 according to the second embodiment may be manufactured by a method similar to that of the first embodiment.

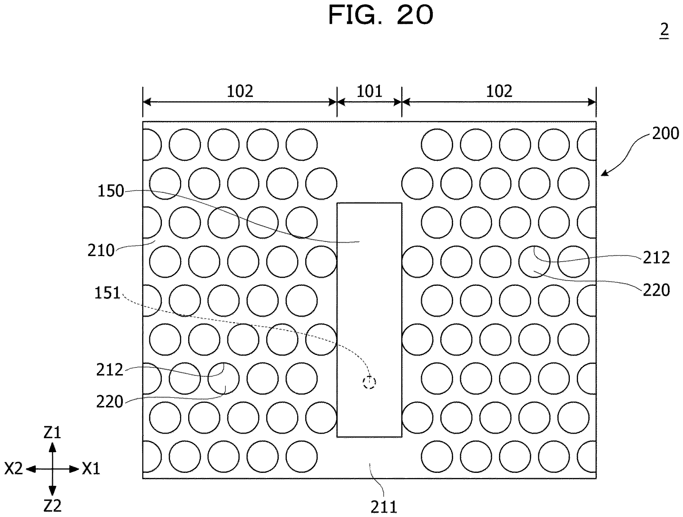

Note that, as illustrated in FIG. 20, a plurality of recessed portions 212 may be arranged in a triangular lattice-like shape in a planar view, and the stress relieving members 220 may be provided in the respective recessed portions 212. FIG. 20 is a top view illustrating an optical waveguide device according to a modification of the second embodiment.

Further, among the plurality of recessed portions 212, the stress relieving members 220 may not be provided in those located on the Z1 side of the optical waveguide layer 150, and those located on the Z2 side of the optical waveguide layer 150 but on the inner side compared with the optical waveguide layer 150.

### (Third Embodiment)

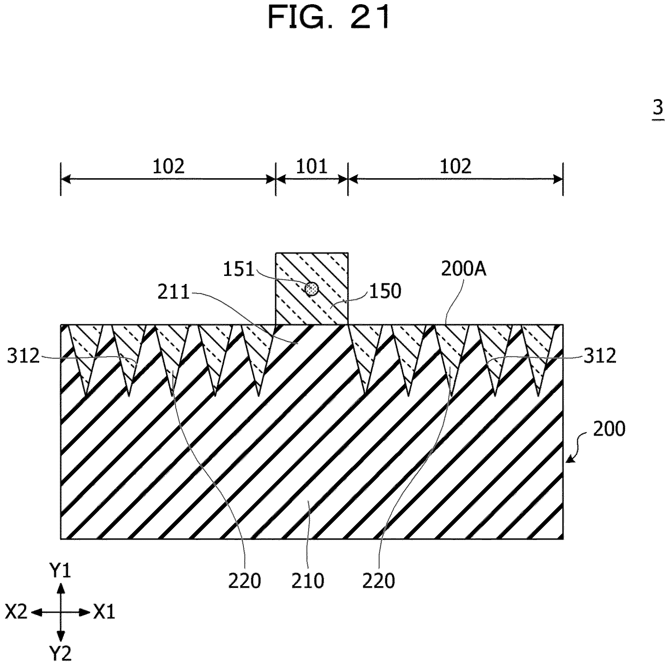

Next, a third embodiment is described. The third embodiment differs from the second embodiment mainly in the cross-sectional shape of the recessed portions. FIG. 21 is a cross-sectional view illustrating an optical waveguide device according to the third embodiment.

As illustrated in FIG. 21, in an optical waveguide device 3 according to the third embodiment, recessed portions 312, instead of the recessed portions 212, are formed in the substrate 210. The shape of the recessed portions 312 is a conical tubular shape having diameter that is smaller at a portion closer to the Y2 side. The cross-sectional shape of the recessed portions 312 is a triangular shape. The stress relieving members 220 are provided in the respective recessed portions 312.

The other components are similar to those of the second embodiment.

Effects similar to those of the second embodiment may also be achieved with the third embodiment.

The optical waveguide device 3 according to the third embodiment may also be manufactured by a method similar to that of the first embodiment.

### (Fourth Embodiment)

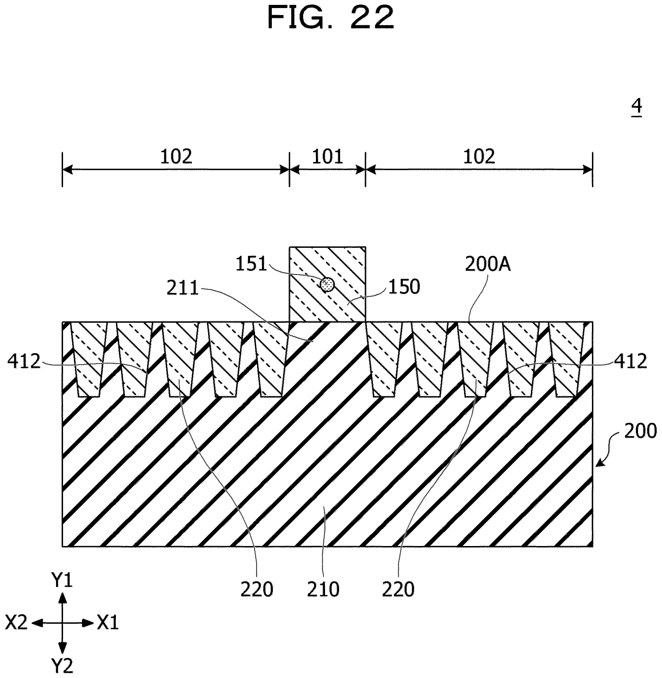

Next, a fourth embodiment is described. The fourth embodiment differs from the second embodiment mainly in the cross-sectional shape of the recessed portions. FIG. 22 is a cross-sectional view illustrating an optical waveguide device according to the fourth embodiment.

As illustrated in FIG. 22, in an optical waveguide device 4 according to the fourth embodiment, recessed portions 412, instead of the recessed portions 212, are formed in the substrate 210. The shape of the recessed portions 412 is an isosceles trapezoidal conical tubular shape having diameter that is smaller at a portion closer to the Y2 side. The cross-sectional shape of the recessed portions 412 is an isosceles trapezoidal shape. The stress relieving members 220 are provided in the respective recessed portions 412.

The other components are similar to those of the second embodiment.

Effects similar to those of the second embodiment may also be achieved with the fourth embodiment.

The optical waveguide device 4 according to the fourth embodiment may also be manufactured by a method similar to that of the first embodiment.

The widths (dimensions in the X1-X2 direction) of the protruding portions 111 and 211 are not necessarily equal to the width (dimension in the X1-X2 direction) of the optical waveguide layer 150. For example, the widths of the protruding portions 111 and 211 may be 150% or less of the width dimension of the optical waveguide layer 150. The widths of the protruding portions 111 and 211 are preferably 130% or less, more preferably 120% or less, and yet more preferably 110% or less of the width of the optical waveguide layer 150. Also, the widths of the protruding portions 111 and 211 may be 70% or more of the width of the optical waveguide layer 150. The widths of the protruding portions 111 and 211 are preferably 75% or more, more preferably 80% or more, and yet more preferably 85% or more of the width of the optical waveguide layer 150.

Note that, in the present disclosure, the materials of the substrate and the stress relieving members are not limited to any particular materials. For example, in a case where the material of the substrate is sapphire, diamond, silicon nitride (Si₃N₄), silicon carbide (SiC), or aluminum nitride (AIN) may be used as the material of the stress relieving members. Also, in a case where the material of the substrate is silicon carbide, diamond or silicon nitride may be used as the material of the stress relieving members. The thermal expansion coefficient of silicon nitride is 2.8 × 10⁻⁶/K, the thermal expansion coefficient of silicon carbide is 3.7 × 10⁻⁶/K, and the thermal expansion coefficient of aluminum nitride is 4.6 × 10⁻⁶/K.

Further, the optical waveguide substrate may have a plurality of first regions, and a plurality of optical waveguide layers may be disposed on the optical waveguide substrate.

### (Fifth Embodiment)

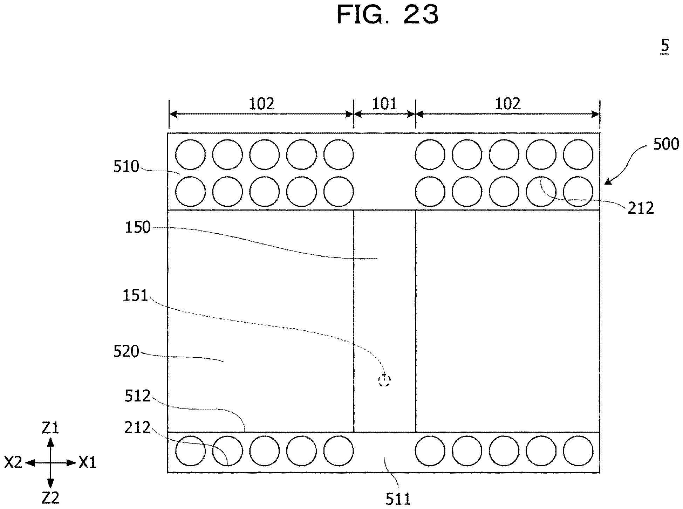

Next, a fifth embodiment is described. The fifth embodiment differs from the first embodiment and the like mainly in the configuration of the substrate. FIG. 23 is a top view illustrating an optical waveguide device according to the fifth embodiment.

As illustrated in FIG. 23, an optical waveguide device 5 according to the fifth embodiment includes an optical waveguide substrate 500, instead of the optical waveguide substrate 100. The optical waveguide substrate 500 includes a substrate 510 and stress relieving members 520. The thermal expansion coefficient of the substrate 510 is greater than the thermal expansion coefficient of the optical waveguide layer 150. Meanwhile, the thermal expansion coefficient of the stress relieving members 520 is smaller than the thermal expansion coefficient of the substrate 510. The substrate 510 contains sapphire, for example. The substrate 510 may be a sapphire substrate. The stress relieving members 520 contain diamond, for example. The stress relieving members 520 may be diamond members.

The substrate 510 includes a first region 101 and second regions 102, a protruding portion 511 is formed in the first region 101, and recessed portions 512 and recessed portions 212 are formed in the second regions 102. The recessed portions 512 are formed on the X1 side and the X2 side of the optical waveguide layer 150. The recessed portions 212 are formed on the Z1 side and the Z2 side of the recessed portions 512. The stress relieving members 520 are provided in the respective recessed portions 512. The stress relieving members 520 may also be provided in the recessed portions 212, and the stress relieving members 520 may not be provided in the recessed portions 212.

The other components are similar to those of the first embodiment.

According to the fifth embodiment, it is also possible to reduce separation between the optical waveguide substrate 500 and the optical waveguide layer 150, as in the first embodiment.

### (Sixth Embodiment)

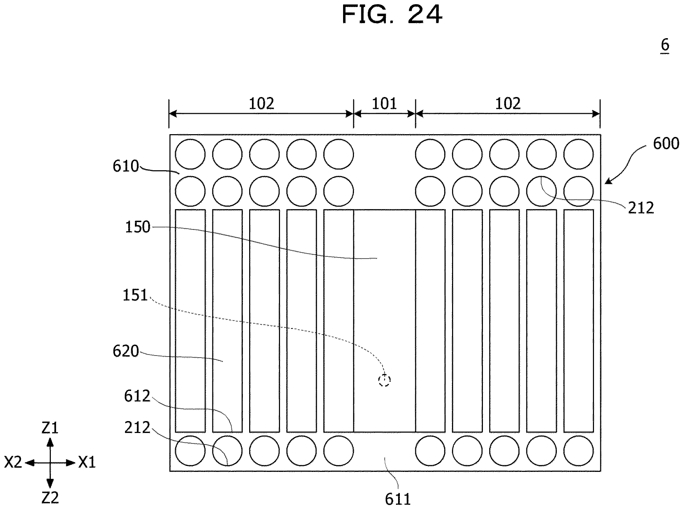

Next, a sixth embodiment is described. The sixth embodiment differs from the first embodiment and the like mainly in the configuration of the substrate. FIG. 24 is a top view illustrating an optical waveguide device according to the sixth embodiment.

As illustrated in FIG. 24, an optical waveguide device 6 according to the sixth embodiment includes an optical waveguide substrate 600, instead of the optical waveguide substrate 100. The optical waveguide substrate 600 includes a substrate 610 and stress relieving members 620. The thermal expansion coefficient of the substrate 610 is greater than the thermal expansion coefficient of the optical waveguide layer 150. Meanwhile, the thermal expansion coefficient of the stress relieving members 620 is smaller than the thermal expansion coefficient of the substrate 610. The substrate 610 contains sapphire, for example. The substrate 610 may be a sapphire substrate. The stress relieving members 620 contain diamond, for example. The stress relieving members 620 may be diamond members.

The substrate 610 includes a first region 101 and second regions 102, a protruding portion 611 is formed in the first region 101, and recessed portions 612 and recessed portions 212 are formed in the second regions 102. The recessed portions 612 are formed on the X1 side and the X2 side of the optical waveguide layer 150. The recessed portions 612 have a rectangular planar shape extending in the Z1-Z2 direction in a planar view, and are arranged side by side in the X1-X2 direction. The recessed portions 212 are formed on the Z1 side and the Z2 side of the recessed portions 612. The stress relieving members 620 are provided in the respective recessed portions 612. The stress relieving members 620 may also be provided in the recessed portions 212, and the stress relieving members 620 may not be provided in the recessed portions 212.

The other components are similar to those of the first embodiment.

According to the sixth embodiment, it is also possible to reduce separation between the optical waveguide substrate 600 and the optical waveguide layer 150, as in the first embodiment.

### (Seventh Embodiment)

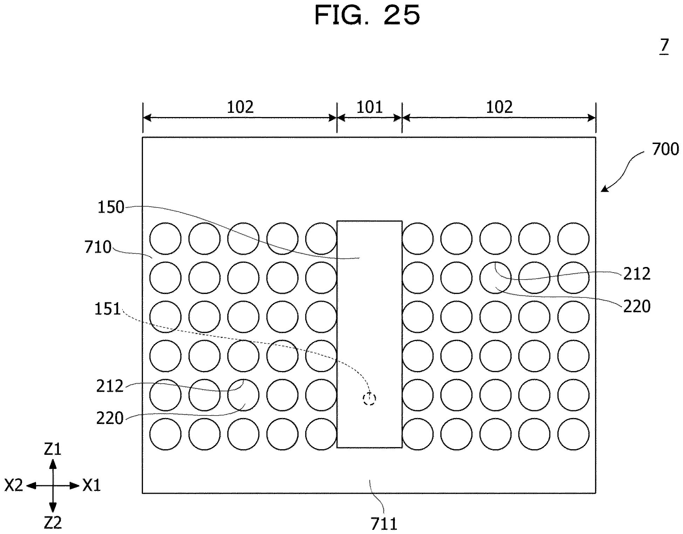

Next, a seventh embodiment is described. The seventh embodiment differs from the second embodiment and the like mainly in the configuration of the substrate. FIG. 25 is a top view illustrating an optical waveguide device according to the seventh embodiment.

As illustrated in FIG. 25, an optical waveguide device 7 according to the seventh embodiment includes an optical waveguide substrate 700, instead of the optical waveguide substrate 200. The optical waveguide substrate 700 includes a substrate 710 and stress relieving members 220. The thermal expansion coefficient of the substrate 710 is greater than the thermal expansion coefficient of the optical waveguide layer 150. Meanwhile, the thermal expansion coefficient of the stress relieving members 220 is smaller than the thermal expansion coefficient of the substrate 710. The substrate 710 contains sapphire, for example. The substrate 710 may be a sapphire substrate. The stress relieving members 220 contain diamond, for example. The stress relieving members 220 may be diamond members.

The substrate 710 includes a first region 101 and second regions 102, a protruding portion 711 is formed in the first region 101, and recessed portions 212 are formed in the second regions 102. The recessed portions 212 are formed on the X1 side and the X2 side of the optical waveguide layer 150. The stress relieving members 220 are provided in the respective recessed portions 212. In the second regions 102, the protruding portion 711 may also be formed in a region on the Z1 side of the optical waveguide layer 150, and in a region on the Z2 side of the optical waveguide layer 150. In this case, the refractive index of the protruding portion 711 is made to vary between the first region 101 and the second regions 102, for example, so that light can be confined in the first region 101.

The other components are similar to those of the second embodiment.

According to the seventh embodiment, it is also possible to reduce separation between the optical waveguide substrate 700 and the optical waveguide layer 150, as in the first embodiment.

In the fifth to seventh embodiments, the recessed portions 312 or the recessed portions 412 may be formed, instead of the recessed portions 212.

### (Eighth Embodiment)

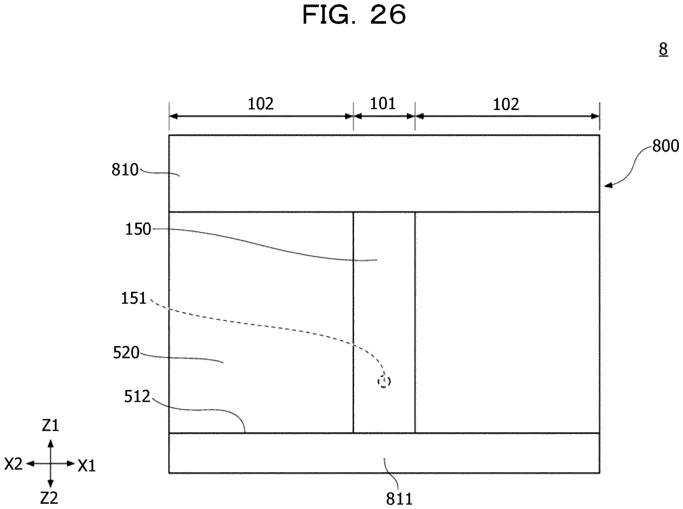

Next, an eighth embodiment is described. The eighth embodiment differs from the fifth embodiment and the like mainly in the configuration of the substrate. FIG. 26 is a top view illustrating an optical waveguide device according to the eighth embodiment.

As illustrated in FIG. 26, an optical waveguide device 8 according to the eighth embodiment includes an optical waveguide substrate 800, instead of the optical waveguide substrate 500. The optical waveguide substrate 800 includes a substrate 810 and stress relieving members 520. The thermal expansion coefficient of the substrate 810 is greater than the thermal expansion coefficient of the optical waveguide layer 150. Meanwhile, the thermal expansion coefficient of the stress relieving members 520 is smaller than the thermal expansion coefficient of the substrate 810. The substrate 810 contains sapphire, for example. The substrate 810 may be a sapphire substrate. The stress relieving members 520 contain diamond, for example. The stress relieving members 520 may be diamond members.

The substrate 810 includes a first region 101 and second regions 102, a protruding portion 811 is formed in the first region 101, and recessed portions 512 are formed in the second regions 102. The recessed portions 512 are formed on the X1 side and the X2 side of the optical waveguide layer 150. The stress relieving members 520 are provided in the respective recessed portions 512. In the second regions 102, the protruding portion 811 may also be formed in a region on the Z1 side of the optical waveguide layer 150, and in a region on the Z2 side of the optical waveguide layer 150. In this case, the refractive index of the protruding portion 811 is made to vary between the first region 101 and the second regions 102, for example, so that light can be confined in the first region 101.

Other components are similar to those of the fifth embodiment.

According to the eighth embodiment, it is also possible to reduce separation between the optical waveguide substrate 800 and the optical waveguide layer 150, as in the first embodiment.

### (Ninth Embodiment)

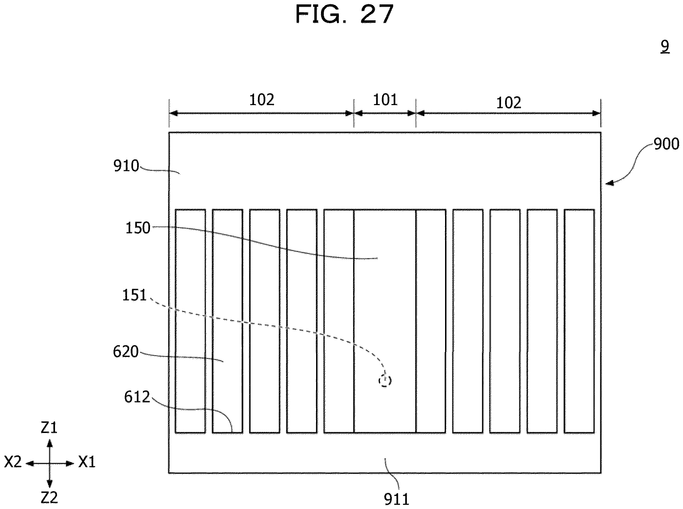

Next, a ninth embodiment is described. The ninth embodiment differs from the sixth embodiment and the like mainly in the configuration of the substrate. FIG. 27 is a top view illustrating an optical waveguide device according to the ninth embodiment.

As illustrated in FIG. 27, an optical waveguide device 9 according to the ninth embodiment includes an optical waveguide substrate 900, instead of the optical waveguide substrate 600. The optical waveguide substrate 900 includes a substrate 910 and stress relieving members 620. The thermal expansion coefficient of the substrate 910 is greater than the thermal expansion coefficient of the optical waveguide layer 150. Meanwhile, the thermal expansion coefficient of the stress relieving members 620 is smaller than the thermal expansion coefficient of the substrate 910. The substrate 910 contains sapphire, for example. The substrate 910 may be a sapphire substrate. The stress relieving members 620 contain diamond, for example. The stress relieving members 620 may be diamond members.

The substrate 910 includes a first region 101 and second regions 102, a protruding portion 911 is formed in the first region 101, and recessed portions 612 are formed in the second regions 102. The recessed portions 612 are formed on the X1 side and the X2 side of the optical waveguide layer 150. The recessed portions 612 have a rectangular planar shape extending in the Z1-Z2 direction in a planar view, and are arranged side by side in the X1-X2 direction. The stress relieving members 620 are provided in the respective recessed portions 612. In the second regions 102, the protruding portion 911 may also be formed in a region on the Z1 side of the optical waveguide layer 150, and in a region on the Z2 side of the optical waveguide layer 150. In this case, the refractive index of the protruding portion 911 is made to vary between the first region 101 and the second regions 102, for example, so that light can be confined in the first region 101.

Other components are similar to those of the sixth embodiment.

According to the ninth embodiment, it is also possible to reduce separation between the optical waveguide substrate 900 and the optical waveguide layer 150, as in the first embodiment.

### (Tenth Embodiment)

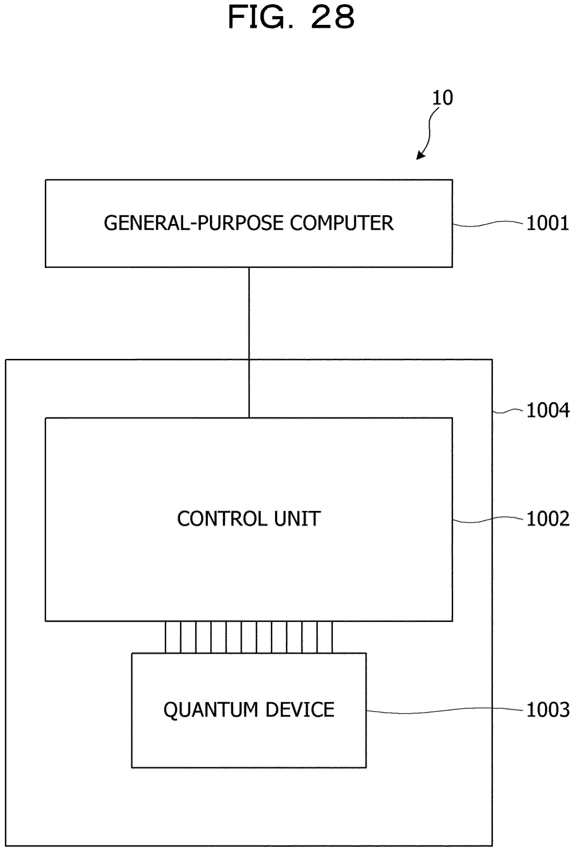

Next, a tenth embodiment is described. The tenth embodiment relates to a quantum computer. FIG. 28 is a diagram illustrating a quantum computer according to the tenth embodiment.

A quantum computer 10 according to the tenth embodiment includes a general-purpose computer 1001, a control unit 1002, and a quantum device 1003. The control unit 1002 controls the quantum device 1003, based on a control signal from the general-purpose computer 1001. A quantum device including the optical waveguide device according to one of the first to ninth embodiments is used as the quantum device 1003. The control unit 1002 and the quantum device 1003 are housed in a cryostat 1004.

With the quantum computer 10, it is possible to perform a stable quantum operation.

Although the preferred embodiments and the like have been described in detail so far, the present disclosure is not limited to the embodiments and the like described above, and various modifications and substitutions may be made to the embodiments and the like described above, without departing from the scope described in the claims.

### CITATION LIST

### PATENT DOCUMENTS

Patent Document 1: Japanese National Publication of International Patent Application No. 2002-527787
Patent Document 2: U.S. Patent No. 6253009

### REFERENCE SIGNS LIST

1, 2, 3, 4, 5, 6, 7, 8, 9 optical waveguide device
10 quantum computer 100, 200, 500, 600, 700, 800, 900 optical waveguide substrate
100A, 200A first surface
101 first region
102 second region
110, 210, 510, 610, 710, 810, 910 substrate
111, 211, 511, 611, 711, 811, 911 protruding portion
112, 212, 312, 412, 512, 612
recessed portion
120, 220, 520, 620 stress relieving member
150 optical waveguide layer
151 color center

## Claims

1. An optical waveguide device comprising:
an optical waveguide substrate that has a first surface; and
an optical waveguide layer that is provided on the first surface, wherein
the optical waveguide substrate includes:
a first region that is exposed on the first surface, and extends linearly; and
a second region that is exposed on the first surface, and is located on both sides of the first region in a planar view,
the optical waveguide layer is provided on the first region,
a second thermal expansion coefficient of the second region is smaller than a first thermal expansion coefficient of the first region, and
a third thermal expansion coefficient of the optical waveguide layer is smaller than the first thermal expansion coefficient.

2. The optical waveguide device according to claim 1, wherein
the optical waveguide substrate includes:
a first member in which a protruding portion is formed in the first region, and a recessed portion is formed in the second region, and that has the first thermal expansion coefficient; and
a second member that is provided in the recessed portion, and has the second thermal expansion coefficient.

3. The optical waveguide device according to claim 2, wherein
a plurality of the recessed portions is formed in the second region, and
the second member is provided in each of the recessed portions.

4. The optical waveguide device according to claim 3, wherein the second member includes photonic crystal.

5. The optical waveguide device according to any one of claims 2 to 4, wherein the second member is same as a material of the optical waveguide layer.

6. The optical waveguide device according to any one of claims 2 to 5, wherein the second member contains diamond.

7. The optical waveguide device according to any one of claims 2 to 6, wherein the first member is sapphire or silicon carbide.

8. The optical waveguide device according to any one of claims 1 to 7, wherein a refractive index of the optical waveguide layer is higher than a refractive index of the first region.

9. The optical waveguide device according to any one of claims 1 to 8, wherein the optical waveguide layer contains diamond.

10. The optical waveguide device according to claim 9, wherein the optical waveguide layer includes a color center.

11. A quantum operation device comprising: the optical waveguide device according to any one of claims 1 to 10.

12. A method for manufacturing an optical waveguide device, the method comprising:
obtaining a substrate that includes a first member that has a protruding portion in a first region that extends linearly, and a recessed portion in a second region located on both sides of the first region in a planar view, and has a first thermal expansion coefficient;
forming, in the recessed portion, a second member that has a second thermal expansion coefficient; and
providing an optical waveguide layer on the protruding portion, wherein
a second thermal expansion coefficient of the second region is smaller than a first thermal expansion coefficient of the first region, and
a third thermal expansion coefficient of the optical waveguide layer is smaller than the first thermal expansion coefficient.

13. The method according to claim 12, wherein the optical waveguide layer is provided after the second member is formed.

14. The method according to claim 12, wherein the second member and the optical waveguide layer are simultaneously formed.
